# EUROPÄISCHE PATENTSCHRIFT

(11) **EP 2 722 152 B1**
(45) Veröffentlichungstag und Bekanntmachung des Hinweises auf die Patenterteilung: **24.09.2014**
(21) Anmeldenummer: 13179555.1
(22) Anmeldetag: 07.08.2013
(51) Int. Cl.: B29C 49/48, B29C 33/00

(54) **Herstellungsverfahren für Blasformen**
Manufacturing method for blow moulding moulds
Procédé de fabrication pour moulage par soufflage

(30) Priorität: 17.10.2012 DE 102012218928
(43) Veröffentlichungstag der Anmeldung: 23.04.2014
(73) Patentinhaber: Krones AG, 93073 Neutraubling (DE)
(72) Erfinder: Albrecht, Thomas, 93073 Neutraubling (DE)
(74) Vertreter: Grünecker, Kinkeldey, Stockmair & Schwanhäusser

(56) Entgegenhaltungen:
- EP-A1- 2 405 033
- DE-A1- 2 936 273
- DE-A1- 10 022 114

## Beschreibung

Die Erfindung betrifft ein Verfahren zum Herstellen von Blasformen für Kunststoffbehälter, insbesondere Kunststoffflaschen.

Kunststoffbehälter, wie beispielsweise Kunststoffflaschen oder dergleichen, können bekanntermaßen durch Streckblasen erwärmter Vorformlinge in Blasformen hergestellt werden. Diese sind beispielsweise entlang der Hauptachse des zu blasenden Behälters in zwei Hälften segmentiert, die vor und nach dem Streckblasen der Kunststoffflasche geöffnet werden. Die Blasformhälften entsprechen im Wesentlichen einem Negativ der herzustellenden Flasche und werden in der Regel, je nach Komplexizität der herzustellenden Flaschenoberflächen, beispielsweise durch Fräsen, Erodieren und Beschichten der inneren Blasformoberfläche hergestellt. Hierbei ist jede Blasformhälfte beispielsweise anhand geeigneter CAD-Verfahren einzeln durch Aneinanderreihen der einzelnen Bearbeitungsschritte auf vergleichsweise aufwändige Art und Weise herzustellen.

In der DE2936273A1 sind Formen beschrieben die mittels Flammspritzen eine Schutzschicht gegen Oxidation aufweisen.

Zusätzliche technische Probleme bereiten funktionelle Hohlräume innerhalb der Blasform, beispielsweise in Form von Kanälen zur Temperierung der Blasform, oder zur Aufnahme von Sensoren oder dergleichen. Die Herstellung derartiger Hohlräume ist vergleichsweise aufwändig.

Es besteht somit der Bedarf für Verfahren zur vereinfachten Herstellung von Blasformen für Kunststoffbehälter, insbesondere für die Serienfertigung derartiger Blasformen zum Einsatz in Blasmaschinen mit einer Vielzahl von Blasstationen.

Die gestellte Aufgabe wird mit einem Verfahren nach Anspruch 1 gelöst. Dieses umfasst demnach einen Schritt zum Herstellen von Blasformrohlingen durch Flammspritzen wenigstens einer metallhaltigen und/oder keramikhaltigen und/oder kunststoffhaltigen Schicht auf ein Negativmodell wenigstens eines Segments der herzustellenden Blasform, und durch Ablösen der wenigstens einen Schicht von dem Negativmodell.

Bezogen auf den Herstellungsprozess der Blasform wird die Innenwand des Blasformsegments nachfolgend als das Formpositiv, das für das Flammspritzen verwendete Negativmodell als das Formnegativ angesehen. Das Negativmodell ist ein Körper, dessen Form im Wesentlichen der Form des herzustellenden Behälters oder eines Behälterabschnitts entspricht. Anders gesagt entspricht das Negativmodell im Wesentlichen der Form der mit dem Negativmodell jeweils auszubildenden Teilkavität der Blasform. Die Blasform ist in an sich bekannter Weise entlang wenigstens einer an der Blasform vorgesehenen Trennebene zum Öffnen / Schließen der Blas form segmentiert. Vorzugsweise ist genau eine Trennebene vorgesehen, die die Blasform in Längsrichtung teilt.

Das Flammspritzen umfasst als Sammelbegriff verschiedene Varianten an sich bekannter Spritzverfahren, wie beispielsweise das Drahtflammspritzen, das Pulverflammspritzen, das Hochgeschwindigkeitsflammspritzen, das Lichtbogenspritzen oder dergleichen.

Unter metallhaltigen und keramikhaltigen Schichten sind solche zu verstehen, in denen ein Anteil wenigstens eines Metalls oder einer keramischen Substanz gezielt eingestellt wird, um Materialeigenschaften zu beeinflussen, im Gegensatz zu metallischen oder keramischen Verunreinigungen, Spurenelementen oder dergleichen. Vorzugsweise haben die metallhaltigen und/oder keramikhaltigen Schichten einen Metallgehalt von wenigstens 25 % und/oder einen Keramikgehalt von wenigstens 25 %.

Unter dem erfindungsgemäßen Ablösen ist ein Entformen zu verstehen, bei dem die Blasformrohlinge, deren Gerüst im Wesentlichen von wenigstens einer aufgespritzten Schicht gebildet wird, von dem Negativmodell Form erhaltend abgetrennt werden. Materialüberstände, Grate oder dergleichen können dann bei Bedarf noch mechanisch entfernt werden.

Vorzugsweise wird das Negativmodell zuerst mit einer Kontaktschicht des Blasformrohlings und danach mit einer Trägerschicht des Blasformrohlings beschichtet. Die Kontaktschicht hat eine an einen vorgegebenen Blasprozess angepasste Wärmeleitfähigkeit und/oder eine geringere elektrische Leitfähigkeit und/oder eine höhere mechanische Verschleißfestigkeit und/oder eine höhere Zähigkeit und/oder eine höhere Bruchfestigkeit und/oder eine bessere Korrosionsbeständigkeit und/oder eine bessere Keimhemmung aufweist als die Trägerschicht. Die Kontaktschicht bildet im Wesentlichen die beim Blasen von Behältern wirksame Innenwand der Blasform aus.

Die Wärmeleitfähigkeit ist beispielsweise derart an den Blasprozess angepasst, dass die Wärmeleitfähigkeit der Kontaktschicht höher ist als die Wärmeleitfähigkeit der Trägerschicht. Dies ermöglicht ein besonders schnelles Abkühlen des geblasenen Behälters. Ebenso könnte die erfindungsgemäß angepasste Wärmeleitfähigkeit der Kontaktschicht niedriger sein als die Wärmeleitfähigkeit der Trägerschicht. Dies ermöglicht, dass Wärme, je nach Prozessauslegung, im geblasenen Behälter gehalten werden kann. Für Standardanwendungen ist eine vergleichweise hohe Wärmeleitfähigkeit der Kontaktschicht erwünscht, um Wärme schnellstmöglich aus dem Behälter abzuleiten. Die Wärmeleitung lässt sich außerdem durch die Dicke der Kontaktschicht gezielt beeinflussen. Beispielsweise kann die Wärmeleitung trotz vergleichweise geringer Wärmeleitfähigkeit bei entsprechend dünner Kontaktschicht ausreichend sein. Der Wärmeübergang durch die Kontaktschicht lässt sich somit gezielt fördern oder behindern.

Zur Erhöhung der mechanischen Verschleißfestigkeit und zur elektrischen Isolation eignet sich beispielsweise eine Kontaktschicht aus oder mit Aluminiumoxid. Für die Wärmeisolierung eignet sich beispielsweise eine Kontaktschicht aus oder mit Zirkoniumoxid. Besonders zähe und bruchfeste Kontaktschichten lassen sich beispielsweise aus oder mit Aluminiumoxid und/oder Titanoxid herstellen. Zur generellen Verbesserung tribologischer Eigenschaften eignen sich Kontaktschichten aus oder mit Chromoxid. Für die Keimhemmung im Sinne einer Verhinderung oder Reduzierung von Keimwachstum eignen sich Kontaktschichten, die Silberionen enthalten. Kontaktschichten zur Verbesserung der Korrosionsbeständigkeit werden vorzugsweise in Verbindung mit Trägerschichten aus Stahl oder Aluminium eingesetzt.

Besonders vorteilhaft ist bei dem erfindungsgemäßen Verfahren, dass die Kontaktschicht auf das Negativmodell gespritzt wird und nicht, wie bei bekannten Verfahren, auf das bereits ausgeformte Blasformsegment, also das Formpositiv, aufgebracht werden muss, da letzteres häufig eine Nachbearbeitung der Kontaktschicht erfordert. Ferner lässt sich mit dem erfindungsgemäßen Verfahren eine vergleichsweise dünne Kontaktschicht aufbringen, die insbesondere dünner ist als die Trägerschicht. Damit lässt sich der Aufwand für die vergleichsweise kostspieligen Materialien der Kontaktschichten reduzieren. Trägerschichten aus ausreichend Wärme leitenden und stabilen Materialien lassen sich demgegenüber kostengünstig anfertigen. Die Trägerschicht hat somit in erster Linie die Aufgabe, die Kontaktschicht mechanisch abzustützen, eine ausreichende Wärmeleitung in einzelnen Bereichen der Blasformen zu gewährleisten, und bei Bedarf funktionelle Elemente, wie Temperierkanäle, Sensoren oder dergleichen aufzunehmen.

Bei einer günstigen Ausführungsform werden die Blasformrohlinge durch vollumfängliches Beschichten eines Behälters oder Behältermodells und anschließende Segmentierung des beschichteten Behälters bzw. Behältermodells hergestellt. Beispielsweise kann der vollumfänglich beschichtete Behälter eine Musterflasche, ein Prototyp oder dergleichen sein.

Erfindungsgemäße Negativmodelle lassen sich jedoch prinzipiell aus beliebigen Materialien, beispielsweise aus Kunststoff, Wachs, Verbundwerkstoffen, Schaum, Glas oder dergleichen, herstellen. Besonders vorteilhaft sind Negativmodelle aus Metall. Für die erfindungsgemäße Beschichtung eignen sich generell Metallschichten besonders gut, beispielsweise aus einer niedrigschmelzenden Aluminium-Nickel-Legierung.

Bei einer besonders günstigen Ausführungsform werden die Blasformrohlinge durch teilumfängliches Einbetten eines Behälters oder Behältermodells in einen insbesondere viskoplastischen Sockel und durch Beschichten des freiliegenden Behälteranteils hergestellt. Prinzipiell lassen sich beliebige Modellkörper anstelle von Behältern in einen geeigneten Sockel einbetten. Unter viskoplastischer Einbettung ist eine nicht-elastische Einbettung, beispielsweise durch Hineindrücken des Behälters oder Modellkörpers in ein geeignetes Material, das sich dabei dauerhaft plastisch verformt, zu verstehen. Durch das Einbetten des Modellkörpers in ein viskoplastisches Trägermaterial lässt sich insbesondere ein Blasformrohling in Form einer Halbschale herstellen.

Somit kann das Negativmodell insbesondere eine Hälfte der abzuformenden Geometrie beschreiben, was insbesondere bei rotationssymmetrischen Behältern ermöglicht, mit nur einer Mutterform in Gestalt des Negativmodells eine Vielzahl von Blasformensätzen herzustellen. Derartige Blasformensätze kommen beispielsweise in Streckblasmaschinen mit mehreren Kavitäten zum Einsatz. Bei nichtrotationssymmetrischen Behältern, wie beispielsweise Formflaschen, lassen sich derartige Blasformensätze in der Regel mit einem korrespondierenden Paar aus Negativmodellen, also mit zwei Mutterformen, herstellen.

Mit den erfindungsgemäßen Negativmodellen lassen sich Blasformen generell besonders kostengünstig und schnell herstellen.

Vorzugsweise umfasst das Negativmodell einen Musterbehälter, wie beispielsweise eine aus der Serienproduktion stammende Kunststoffflasche, insbesondere eine mit einem Kühlmedium gefüllte und/oder unter Überdruck stehende Kunststoffflasche. Es ließen sich jedoch auch andere Negativmodelle verwenden, beispielsweise aus Metall, Kunststoff, Glas, Verbundwerkstoffen oder dergleichen hergestellte Testkörper, Prototypen oder dergleichen.

Mit einem Kühlmedium, insbesondere einer Kühlflüssigkeit lässt sich einer Überhitzung der Negativmodelle und/oder einem Schwund der Blasformrohlinge beim Flammspritzen entgegenwirken. Mit Hilfe eines Überdrucks lassen sich insbesondere dünnwandige Kunststoffbehälter oder dergleichen während des Flammspritzens mechanisch stabilisieren, insbesondere um einem Schwund beim Flammspritzen entgegen zu wirken.

Vorzugsweise werden auf der dem Negativmodell abgewandten Seite des Blasformrohlings, insbesondere auf der Trägerschicht, ferner auflösbare Formnegative aus einem chemisch und/oder thermisch auflösbaren und/oder ablösbaren Material temporär angebracht und durch Flammspritzen metallisch und/oder keramisch beschichtet. Die auflösbaren Formnegative haben insbesondere eine derartige Gestalt, dass sich durch das Entfernen der auflösbaren Formnegative aus der umgebenden metallischen und/oder keramischen Beschichtung ein funktioneller Hohlraum, beispielsweise ein Kanal zum Durchleiten eines Wärmeleitmediums, ausbildet. Die auflösbaren Formnegative können beispielsweise mit Hilfe geeigneter Lösemittel aus den sie umgebenden Beschichtungen entfernt werden und/oder durch ein Ausschmelzen. Die derart hergestellten Hohlräume lassen sich zum Kühlen der Blasformen, zum Beheizen derselben, zur Aufnahme von Sensoren, aktiven Heizelementen, aktiven Kühlelementen, elektrischen Leitungen oder dergleichen, und/oder zum Leiten von Druckluft einsetzen.

Derart hergestellte Temperierkanäle ermöglichen einen besonders guten Wärmeübergang zwischen dem durchgeleiteten Wärmeleitmedium und den angrenzenden Blasformwänden ohne Wärme isolierende Zwischenschichten. Ferner lassen sich Temperierkanäle mit besonders geringem Abstand von der Kontaktschicht und/oder mit im Wesentlichen konstantem Abstand zur Kontaktschicht herstellen.

Mehrere auflösbare Formnegative können beispielsweise in Form einer Negativmaske in einem gemeinsamen Verfahrensschritt an dem Blasformrohling angebracht werden. Somit lässt sich eine große Anzahl von Hohlräumen, wie beispielsweise Temperierkanälen, Verbindungskanälen, Versorgungskanälen oder dergleichen, mit geringem technischen Aufwand und damit besonders kostengünstig herstellen. Insbesondere lassen sich komplexe Kanalstrukturen im Inneren der Blasformen herstellen. Dies ist besonders vorteilhaft bei einer Herstellung von Formflaschen, bei der die Blasformen vorzugsweise in einzelnen Bereichen unterschiedlich temperiert werden müssen.

Bei einer weiteren günstigen Ausführungsform werden auf der dem Negativmodell abgewandten Seite des Blasformrohlings, insbesondere direkt auf der Trägerschicht, ferner Wärmeleitrohre angebracht und durch Flammspritzen metallisch und/oder keramisch beschichtet. Derartige Wärmeleitrohre werden vorzugsweise aus dünnwandigen Rohren und/oder Schläuchen hergestellt, um einen guten Wärmeübergang von dem durchgeleiteten Wärmeleitmedium auf die angrenzenden Wandbereiche der Blasformen zu gewährleisten. Die anschließende metallische und/oder keramische Beschichtung mittels Flammspritzen verbessert den Wärmeübergang und dient der Vermeidung von Luftspalten zwischen der Wand des Blasformrohlings und den Wärmeleitrohren.

Vorzugsweise werden auf der dem Negativmodell abgewandten Seite des Blasformrohlings, insbesondere direkt auf der Trägerschicht, ferner wenigstens ein Temperatursensor, ein Drucksensor, ein Heizelement und/oder ein Kühlelement angebracht und durch Flammspritzen metallisch und/oder keramisch beschichtet. Dies ermöglicht eine einfache Integration von Sensoren und aktiv betriebenen Heizelementen und Kühlelementen bei gutem Wärmeübergang in die angrenzenden Wandbereiche der Blasform.

Vorzugsweise wird auf der dem Negativmodell abgewandten Seite des Blasformrohlings, insbesondere direkt auf der Trägerschicht, ferner ein elektromagnetisch auslesbarer Datenträger, insbesondere ein RFID-Chip, angebracht. Dies ermöglicht eine Produktkennzeichnung, Überwachung und Identifizierung der Blasform. Insbesondere im Zusammenhang mit einer Hinterfüllung der Blasformrohlinge lassen sich derartige Datenträger vor aggressiven Reinigungsmitteln und mechanischer Belastung geschützt und für Produktpiraten unsichtbar in die Blasformen integrieren.

Vorzugsweise wird das Negativmodell zum Ablösen des Blasformrohlings elastisch verformt, und/oder der Blasformrohling wird zum Ablösen von der Negativform elastisch verformt. Insbesondere ein elastisches Negativmodell erleichtert das Entformen von Blasformrohlingen mit Hinterschneidungen oder dergleichen. Beispielsweise kann das Negativmodell als dünnwandige Halbschale ausgebildet sein, die sich für das Entformen geringfügig zusammen drücken lässt.

Vorzugsweise ist das Negativmodell auf einer Grundplatte mit wenigstens einer Negativform für Befestigungselemente zum Befestigen der Blasformrohlinge in äußeren Formschalen oder dergleichen montiert. Das Negativmodell und die wenigstens eine Negativform werden dann beim Herstellen des Blasformrohlings gemeinsam beschichtet. Mit der wenigstens einen Negativform lassen sich insbesondere in Bereichen, in denen sich korrespondierende Blasformhälften im geschlossenen Zustand der Blasform berühren, Funktionsflächen bereitstellen, mit denen sich die Blasformrohlinge formschlüssig in Haltestrukturen, wie beispielsweise in den äußeren Formschalen, fixieren lassen.

Eine besonders günstige Ausführungsform des erfindungsgemäßen Verfahrens umfasst ferner einen Schritt zum Hinterfüllen der Blasformrohlinge auf ihrer dem Negativmodell abgewandten Seite mit einem insbesondere metallhaltigen Gießharz, einer Metalllegierung und/oder einem insbesondere metallhaltigen Schaum. Beispielsweise kann der Blasformrohling, gegebenenfalls nach mechanischer Nachbearbeitung, in einem Formkasten oder in einem Grundkörper eines Spritzgießwerkzeugs positioniert werden und mit einem Harz, beispielsweise mit einem Aluminiumgehalt von 80 bis 90%, hinterfüllt werden. Die Hinterfüllung könnte ebenso mit einer niedrigschmelzenden Metalllegierung realisiert werden. Alternativ wäre beispielsweise ein Ausschäumen mit einem aluminiumhaltigen Schaum denkbar.

Vorzugsweise werden die Blasformrohlinge in äußeren Formhalbschalen platziert und durch das Hinterfüllen mit diesen verbunden. Derartige Halbschalen könnten beispielsweise aus Metall oder Kunststoff gefertigt sein und mit den Blasformrohlingen jeweils einen Formschluss bilden. Nach derartiger Fixierung der Blasformrohlinge lässt sich ein zwischen den Blasformrohlingen und den Formhalbschalten gebildeter Zwischenraum auf einfache Weise verfüllen. Um einen Wärmeübergang zwischen Formträgern und Blasformhälften zu begünstigen, wird die Hinterfüllung vorzugsweise mit einem Harz oder einer Legierung mit guten Wärmeleiteigenschaften ausgebildet. Dadurch lässt sich bei der Herstellung von Kunststoffbehältern in den erfindungsgemäß hergestellten Blasformen eine besonders effektive Blasformtemperierung realisieren. Ebenso lässt sich in die Hinterfüllung eine Temperiervorrichtung, wie beispielsweise wärmeleitende Medien transportierende Rohre aus Kupfer, Aluminium oder dergleichen, eingießen. In gleicher Weise könnten Sensoren für eine Temperaturüberwachung, eine Druckregelung in der Blasform oder dergleichen in die Hinterfüllung integriert werden.

Die Wärmeleiteigenschaften der Hinterfüllung liegen vorzugsweise in einem Bereich von 1 bis 100 W/(m*K) die Wärmeleiteigenschaften der Trägerschicht liegen vorzugsweise in einem Bereich von 1 bis 500 W/(m*K), und die Wärmeleiteigenschaften der Kontaktschicht liegen vorzugsweise in einem Bereich von 1 bis 500 W/(m*K),

Die Dicke der Trägerschicht beträgt vorzugsweise 1 bis 5 mm, insbesondere 2 bis 3 mm. Die Dicke der Kontaktschicht beträgt vorzugsweise 0,1 bis 1 mm, insbesondere 0,1 bis 0,5 mm.

Bevorzugte Ausführungsformen der Erfindung sind in der Zeichnung dargestellt. Es zeigen:
- Fig. 1: eine schematische Darstellung einer bevorzugten Ausführungsform des erfindungsgemäßen Herstellungsverfahrens;
- Fig. 2: eine schematische Draufsicht auf einen erfindungsgemäß hinterfüllten Blasformrohling;
- Fig. 3: einen schematischen Schichtaufbau eines erfindungsgemäßen Blasformrohlings;
- Fig. 4: einen schematischen Querschnitt durch eine erfindungsgemäß hergestellte Blasform; und
- Fig. 5: eine schematische Ansicht eines mit der erfindungsgemäß hergestellten Blasform hergestellten Behälters und der zugehörigen Blasform.

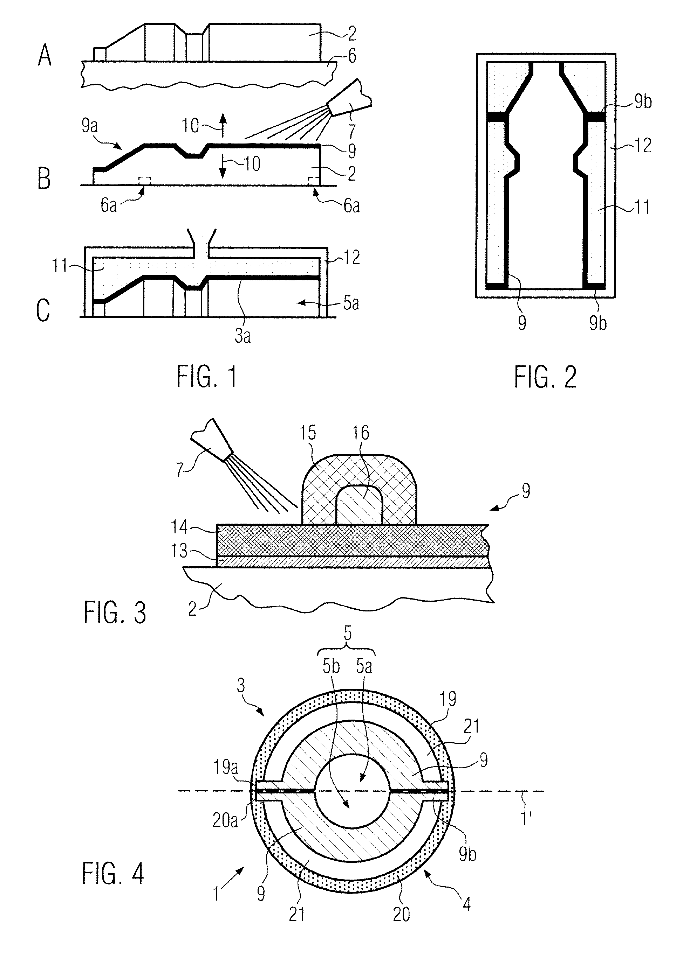

Wie die Fig. 1 unter Bezugnahme auf die Fig. 4 erkennen lässt, umfasst eine bevorzugte Ausführungsform des erfindungsgemäßen Verfahrens zum Herstellen von Blasformen 1 einen mit A gekennzeichneten Schritt, in dem ein Negativmodell 2 eines herzustellenden Blasformsegments 3, beispielsweise einer Blasformhälfte, bereitgestellt wird. Das Negativmodell 2 ist ein Körper im Wesentlichen entsprechend einem Formnegativ der Innenwand 3a des herzustellenden Blasformsegments 3 und entspricht somit dem Formpositiv der von diesem Blasformsegment 3 umschlossenen Teilkavität 5a der Blasform 1. Vorzugsweise besteht die Blaskavität 5 der Blasform 1 aus zwei sich ergänzenden Teilkavitäten 5a, 5b, die symmetrisch bezüglich einer Trennebene 1' der Blasform 1 sind. Die Blaskavität kann besonders bevorzugt auch aus drei sich ergänzenden Teilkavitäten bestehen, nämlich aus zwei Teilkavitäten 5a, 5b sowie einem dazugehörigen Bodenteil (nicht dargestellt).

Wie abgebildet kann das Negativmodell 2 beispielsweise aus einer Kunststoffflasche bestehen, die längs ihrer Hauptachse halbseitig in einen Sockel 6 eingebettet ist, der insbesondere aus einem viskoplastischen Material bestehen kann. Ebenso könnte das in der Fig. 1 dargestellte Negativmodell 2 mit Hilfe beliebiger Modellkörper aus Metall, Kunststoff, geschäumten Materialien oder dergleichen hergestellt werden, beispielsweise durch CNC-Fräsen oder dergleichen. Der in der Fig. 1 dargestellte Sockel 6 könnte dann auch eine starre Grundplatte sein.

Handelt es sich bei dem Negativmodell 2 um einen Hohlkörper, insbesondere um eine dünnwandige Kunststoffflasche, so lässt sich das Negativmodell 2 mit einer Kühlflüssigkeit befüllen oder mit einem unter Überdruck stehenden Gas. Dadurch lassen sich thermisch bedingter Schwund und/oder plastische mechanische Verformungen, insbesondere beim nachfolgenden Flammspritzen, verringern und/oder vermeiden.

In einem mit B gekennzeichneten Schritt wird durch Flammspritzen mittels einer an sich bekannten Beschichtungsvorrichtung 7 ein Blasformrohling 9 auf das Negativmodell 2 aufgespritzt. Der Blasformrohling 9 ist vorzugsweise mehrschichtig aufgebaut und kann auf seiner dem Negativmodell 2 abgewandten Seite 9a erhabene funktionelle Strukturen umfassen, die insbesondere in dem Blasformrohling 9 ausgebildete Hohlräume, wie beispielsweise Kanalwände oder dergleichen, umschließen. Deren Herstellung mittels Flammspritzen wird unter Bezugnahme auf die Fig. 3 noch ausführlicher erläutert.

Im Anschluss an das Flammspritzen wird der Blasformrohling 9 von dem Negativmodell 2 getrennt. Das Entformen ist schematisch mit Trennpfeilen 10 symbolisiert. Um das Entformen im Bereich von Hinterschneidungen oder dergleichen zu erleichtern, kann insbesondere das Negativmodell 2 elastisch ausgebildet sein. Je nach Schichtaufbau und Materialstärke des Blasformrohlings 9 wäre es prinzipiell auch denkbar, diesen mit einer für das Entformen benötigten Elastizität auszubilden. Der Blasformrohling 9 ist jedoch vorzugsweise wenigstens so starr, dass er ohne Verformung in der Blasform 1 befestigt kann.

In einem mit C bezeichneten optionalen Schritt wird der Blasformrohling 9 mit einer Hinterfüllung 11 mechanisch stabilisiert und/oder für die Montage in der Blasform 1 vorbereitet. Hierfür kann eine geeignete Außenform 12 bereitgestellt werden, so dass ein zwischen dem Blasformrohling 9 und der Außenform 12 gebildeter Zwischenraum mit der Hinterfüllung 11 aufgefüllt wird. Die Hinterfüllung 11 besteht aus einem Material mit einer für den späteren Produktionsbetrieb geeigneten Wärmeleitfähigkeit und Festigkeit. Geeignet sind beispielsweise metallhaltige Schäume und/oder metallhaltige Harze oder dergleichen.

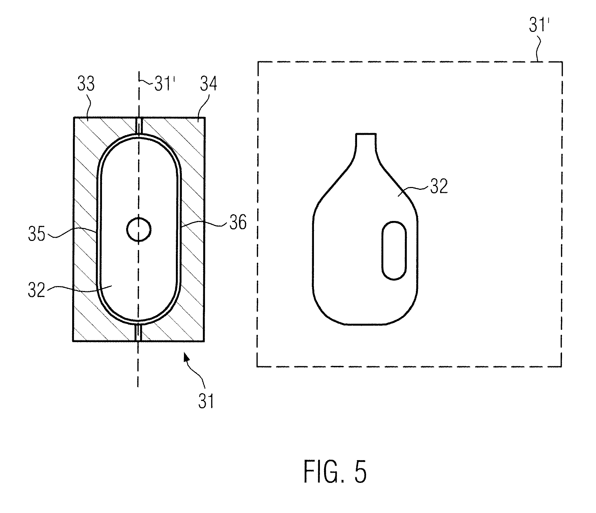

Das Negativmodell 2 ist prinzipiell als Dauerform ausgelegt. Beispielsweise lässt sich mit einem einzelnen Negativmodell 2 eine Vielzahl miteinander korrespondierender Blasformhälften zum Blasen rotationssymmetrischer Behälter herstellen. Zum Herstellen nichtrotationssymmetrischer Behälter, wie beispielsweise der in der Fig. 5 angedeuteten Formflasche 32, wird dann ein bezüglich der Trennebene 31' der zugehörigen Blasform 31 spiegelbildlich miteinander korrespondierendes Paar aus Negativmodellen (nicht gezeigt) benötigt.

Mit Hilfe eines einzelnen Negativmodells 2 oder eines korrespondierenden Paars aus Negativmodellen lässt sich jeweils eine Serie von Blasformhälften herstellen, um beispielsweise die Blaskavitäten einer Blasmaschine mit identischen Blasformen 1 auszustatten. Blasformen 1 mit vergleichsweise geringen Maßtoleranzen lassen sich somit kostengünstig in Serie fertigen.

In der Fig. 3 ist schematisch ein bevorzugter Schichtaufbau des erfindungsgemäßen Blasformrohlings 9 dargestellt. Demnach umfasst dieser eine Kontaktschicht 13, die in einem ersten Beschichtungsschritt auf das Negativmodell 2, beispielsweise ebenso durch Flammspritzen, aufgebracht wird. Ferner ist eine Trägerschicht 14 vorgesehen, die nachfolgend auf die Kontaktschicht 13 durch Flammspritzen aufgebracht wird. Die Trägerschicht 14 hat in erster Linie eine mechanisch abstützende und Wärme leitende Funktion.

Die Kontaktschicht 13 ist beim späteren Blasen von Behältern im Kontakt mit diesen, ebenso mit Prozessmedien, Reinigungsmittel oder dergleichen. Dementsprechend ist die Kontaktschicht 13 speziell an die späteren Produktionsbedingungen innerhalb der Blasformen 1 angepasst.

Vorzugsweise ist die Kontaktschicht 13 dünner als die Trägerschicht 14. Dadurch lassen sich für die Kontaktschichten 13 verwendete Materialien, die vergleichsweise kostspielig sein können, einsparen. Bevorzugte Eigenschaften der Kontaktschicht 13 sind beispielsweise eine gezielt an den jeweiligen Blasprozess angepasste Wärmeleitfähigkeit und/oder eine geringere elektrische Leitfähigkeit und/oder höhere mechanische Verschleißfestigkeit und/oder eine höhere Zähigkeit und/oder eine Bruchfestigkeit und/oder eine bessere Korrosionsbeständigkeit und/oder eine Keimhemmung als die Trägerschicht 14.

Wie die Fig. 3 erkennen lässt, ist auf der dem Negativmodell 2 abgewandten Seite 9a des Blasformrohlings 9 vorzugsweise eine erhabene funktionelle Struktur 15, beispielsweise in Form einer Wand eines Hohlraums, wie beispielsweise eines Kühlkanals, Heizkanals oder dergleichen, vorgesehen. Derartige funktionelle Strukturen 15 lassen sich auf besonders einfache Weise herstellen, in dem nach dem Flammspritzen der Trägerschicht 14 zunächst wenigstens ein auflösbares Formnegativ 16 beispielsweise durch Aufspritzen auf der Trägerschicht 14 temporär angebracht wird.

Das auflösbare Formnegativ 16 ist ebenfalls eine erhabene Struktur, beispielsweise in Form einer erhabenen Bahn oder dergleichen. Das auflösbare Formnegativ 16 besteht aus einem Material, das sich mittels Lösemitteln und/oder durch Erwärmen von der Trägerschicht 14 wieder gezielt auflösen und/oder ablösen lässt. Für das auflösbare Formnegativ 16 eignen sich verschiedene, gegebenenfalls sogar wasserlösliche Materialien, wie beispielsweise eine eingedickte Zuckerlösung, die bei etwa 160 °C karamellisiert.

Vor dem Entfernen des auflösbaren Formnegativs 16 wird dieses ebenso durch Flammspritzen mit einer vorzugsweise metallhaltigen und/oder keramikhaltigen Schicht überzogen, die dann das Gerüst der funktionellen Struktur 15 bildet, insbesondere eine Wand eines Kühlkanals, Heizkanals, Kabelkanals oder dergleichen Hohlräume. Die Trägerschicht 14 und die funktionelle Struktur 15 sind vorzugsweise aus dem gleichen Material gefertigt.

Auflösbare Formnegative 16 lassen sich beispielsweise vollautomatisch aufspritzen. Sie ermöglichen das Ausbilden von Negativmodellen für Hohlräume direkt auf der Trägerschicht 14. Nach dem Auflösen des Formnegativs 16 entspricht die Kavität des derart entstandenen Hohlraums im Wesentlichen der Gestalt des aufgelösten Formnegativs 16. Folglich lassen sich Hohlräume, insbesondere Kanäle mit sehr geringem Abstand zur inneren Oberfläche der Blasformen 1 herstellen. Ebenso können derartige Kanäle im Gegensatz zu separaten, entlang der abgewandten Oberfläche 9a verlaufenden Rohren oder Schläuchen nahezu beliebig an die Kontur der Trägerschicht 14 angepasst werden und dieser im unmittelbaren Kontakt folgen. Hierbei können insbesondere Wärme isolierende Lufteinschlüsse zwischen den Wänden von Temperierkanälen und der Trägerschicht 14 zuverlässig vermieden werden.

Temperierkanäle mit sehr guten Wärmeübertragungseigenschaften zum Kühlen oder Erwärmen der Blasformhälften lassen sich auf diese Weise gezielt, in nahezu beliebigen Verteilungsmustern und auf kostengünstige Weise herstellen.

Anstelle der auflösbaren Formnegative 16 oder ergänzend ließen sich auf der Trägerschicht 14 auch separate Rohre oder Schläuche permanent befestigen, die anschließend ebenfalls durch Flammspritzen mit einer Beschichtung umschlossen werden. Auch in diesem Fall könnte die Beschichtung derartiger Rohre oder Schläuche aus demselben Material bestehen wie die Trägerschicht 14.

Nach dem Entformen lassen sich die Blasformrohlinge 9 mit den funktionellen Strukturen 15 in gleicher Weise hinterfüllen, wie dies im Beispiel der Fig. 1 angedeutet ist. Die Wärmeleitung kann hierbei durch geeignetes Material für die Hinterfüllung, beispielsweise metallhaltige Schäume, metallhaltige Harze oder dergleichen verbessert werden.

In der Fig. 4 ist eine Blasform 1 mit erfindungsgemäß hergestellten Blasformrohlingen 9 schematisch im Querschnitt dargestellt. Demnach umfasst diese zwei bezüglich der Trennebene 1' der Blasform 1 spiegelbildlich angeordnete Blasformhälften 3, 4. Angedeutet sind ferner zugehörige äußere Formschalen 19, 20 der Blasformhälften 3, 4. Zwischen den Blasformrohlingen 9 und den äußeren Formschalen 19, 20 jeweils ausgebildete Zwischenräume sind mit einer Hinterfüllung 21 ausgefüllt.

Schematisch angedeutet sind ferner Verbindungsstrukturen 9b, die beim Flammspritzen der Blasformrohlinge 9 als integraler Bestandteil der Blasformrohlinge 9 hergestellt werden. Die Verbindungsstrukturen 9b dienen zum formschlüssigen Positionieren der Blasformrohlinge 9 in den äußeren Formschalen 19, 20 durch Eingreifen in korrespondierende Verbindungsstrukturen 19a, 20a, beispielsweise Nuten oder dergleichen. Die Montage der Blasformhälften kann dann so durchgeführt werden, dass die Blasformrohlinge 9 zunächst formschlüssig in den äußeren Formschalen 19, 20 eingehängt werden und anschließend durch die Hinterfüllung 21 mit den äußeren Formschalen 19, 20 im Wesentlichen spaltfrei verbunden werden. Die Blasformhälften können schließlich, beispielsweise mittels Mutterformen, in an sich bekannter Weise in aufklappbare Blasformträger (nicht dargestellt) eingebaut werden.

Die Herstellung der Verbindungsstrukturen 9b der Blasformrohlinge 9 kann beispielsweise dadurch erfolgen, dass in dem in der Fig. 1 angedeuteten Sockel 6 oder in einer vergleichbaren Grundplatte entsprechende Negativformen 6a der Verbindungsstrukturen 9b ausgebildet sind. Diese Negativformen 6a werden gemeinsam mit dem Negativmodell 2 durch Flammspritzen beschichtet, um die Verbindungsstrukturen 9b als integralen Bestandteil der Blasformrohlinge 9 herzustellen. Die Verbindungsstrukturen 9b der Blasformrohlinge 9 und die entsprechenden Negativformen 6a sind in den Fig. 1 und 2 lediglich schematisch angedeutet.

Ein mit einer erfindungsgemäß hergestellten Blasform 31 hergestellter Behälter 32 ist beispielhaft für eine Formflasche in der Fig. 5 dargestellt. Entsprechend der in der Fig. 5 links dargestellten Draufsicht ist ein Paar bezüglich der Trennebene 31' der Blasform 31 spiegelbildlich korrespondierende Blasformhälften 33, 34 vorgesehen. Diese lassen sich entsprechend den beschriebenen Verfahrensschritten aus zwei spiegelbildlich miteinander korrespondierenden Negativmodellen herstellen. Die Oberflächeneigenschaften des Behälters 32 lassen sich beispielsweise auf einfache Weise mittels der Kontaktschicht 13 der zugehörigen Blasformrohlinge 35, 36 anpassen.

Die erfindungsgemäß auf die Negativmodelle aufgespritzten Blasformrohlinge 9, 35, 36 können bei Bedarf vor der Montage in den Blasformhälften mechanisch nachbearbeitet werden, beispielsweise im Sinne eines Entgratens, Glättens von Kanten oder dergleichen.

Die für die Blasformrohlinge 9, 35, 36 eingesetzten Materialien, insbesondere der Kontaktschicht 13 und der Trägerschicht 14, lassen sich auf einfache Weise an spezielle Produktionsbedingungen oder Produktanforderungen bezüglich der herzustellenden Behälter anpassen. Dies ist insbesondere durch einfache Anpassung des Flammspritzverfahrens ohne grundlegende Änderung von Herstellungsparametern, Werkzeugen oder dergleichen, möglich. Somit ermöglicht das erfindungsgemäße Verfahren sowohl eine kostengünstige und eine mit geringen Herstellungstoleranzen behaftet Produktion von Blasformhälften als auch eine flexible Anpassung an sich ändernde Produktionsbedingungen oder Produktanforderungen.

Aufgrund der großen Auswahl verfügbarer Materialien für Flammspritzverfahren können die Blasformhälften flexibel an unterschiedlichste Anforderungen angepasst werden, ohne den prinzipiellen Ablauf des Verfahrens zu ändern. Auch können unterschiedliche Hinterfüllungen 11, 21 an die jeweiligen thermischen Anforderungen beim Blasen der Behälter mit geringem Aufwand angepasst werden. Zu diesem Zweck sind beispielsweise lediglich die Anteile metallhaltiger Zusätze oder dergleichen anzupassen. Ebenso lassen sich Kühlkanäle oder Kanäle zum segmentweisen Temperieren der Blasformhälften problemlos und in flexibler Weise in das Innere der Blasformhälften integrieren. Hierbei ermöglicht das erfindungsgemäße Verfahren insbesondere auch, derartige Kanäle mit geringstmöglichem Abstand zu den beim Blasen aktiven Oberflächen und mit konstantem Abstand zu diesen Flächen herzustellen.

Analog zu den auflösbaren Formnegativen 16 lassen sich funktionelle Elemente 37 in die Blasformrohlinge 9, 35, 36 auch permanent integrieren. Dies können beispielsweise Sensoren zur Temperaturmessung, zur Druckmessung, Kühlelemente, Heizelemente und/oder berührungslos auslesbare Datenträger sein, wie beispielsweise RFID-Chips. Diese Elemente 37 bzw. die Elemente 37 umgebende Kavitäten lassen sich durch das erfindungsgemäße Flammspritzverfahren überziehen bzw. ausbilden und in die Blasformrohlinge 9, 35, 36 auf deren dem jeweiligen Negativmodell abgewandten Seite integrieren. Hierbei ist die Positionierung derartiger Elemente 37 an den Blasformrohlingen 9, 35, 36 flexibel an die jeweiligen Messaufgaben oder Regelungsaufgaben anpassbar. Durch die Integration dieser funktionellen Elemente 37 im Inneren der Blasformrohlinge 9, 35, 36 und somit im Inneren der Blasformhälften 3, 4, 33, 34 lassen sich diese Elemente 37 auf einfache Weise gegen mechanische Beschädigungen, den Einfluss von Prozessmedien, Reinigungsmedien oder dergleichen schützen. Somit kann auch ein besonders zuverlässiger Betrieb der erfindungsgemäß hergestellten Blasformen 1, 31 gewährleistet werden.

## Patentansprüche

1. Verfahren zum Herstellen von Blasformen (1, 31) für Kunststoffbehälter (32), insbesondere Kunststoffflaschen, umfassend einen Schritt zum Herstellen von Blasformrohlingen (9, 35, 36) durch Flammspritzen wenigstens einer metallhaltigen und/oder keramikhaltigen und/oder kunststoffhaltigen Schicht (13, 14) auf ein Negativmodell (2) wenigstens eines Segments (3, 4, 35, 36) der herzustellenden Blasform, und durch Ablösen der wenigstens einen Schicht von dem Negativmodell.

2. Verfahren nach Anspruch 1, wobei das Negativmodell (2) zuerst mit einer Kontaktschicht (13) des Blasformrohlings (9) und danach mit einer Trägerschicht (14) des Blasformrohlings (9, 35, 36) beschichtet wird, und wobei die Kontaktschicht eine an einen vorgegebenen Blasprozess angepasste Wärmeleitfähigkeit und/oder eine geringere elektrische Leitfähigkeit und/oder eine höhere mechanische Verschleißfestigkeit und/oder eine höhere Zähigkeit und/oder eine höhere Bruchfestigkeit und/oder eine bessere Korrosionsbeständigkeit und/oder eine bessere Keimhemmung aufweist als die Trägerschicht.

3. Verfahren nach Anspruch 1 oder 2, wobei die Blasformrohlinge (9, 35, 36) durch vollumfängliches Beschichten eines Behälters oder Behältermodells und anschließende Segmentierung des beschichteten Behälters / Behältermodells hergestellt werden.

4. Verfahren nach Anspruch 1 oder 2, wobei die Blasformrohlinge (9, 35, 36) durch teilumfängliches Einbetten eines Behälters oder Behältermodells in einen insbesondere viskoplastischen Sockel (6) und durch Beschichten des freiliegenden Behälteranteils hergestellt werden.

5. Verfahren nach wenigstens einem der vorigen Ansprüche, wobei das Negativmodell (2) einen Musterbehälter umfasst, insbesondere eine mit einem Kühlmedium gefüllte und/oder unter Überdruck stehende Kunststoffflasche.

6. Verfahren nach wenigstens einem der vorigen Ansprüche, wobei auf der dem Negativmodell (2) abgewandten Seite (9a) des Blasformrohlings (9) ferner wenigstens ein ablösbares Formnegativ (16) aus einem chemisch und/oder thermisch ablösbaren Material temporär angebracht und durch Flammspritzen metallisch und/oder keramisch beschichtet werden.

7. Verfahren nach wenigstens einem der vorigen Ansprüche, wobei auf der dem Negativmodell (2) abgewandten Seite (9a) des Blasformrohlings (9) ferner Wärmeleitrohre permanent angebracht und durch Flammspritzen metallisch und/oder keramisch beschichtet werden.

8. Verfahren nach wenigstens einem der vorigen Ansprüche, wobei auf der dem Negativmodell (2) abgewandten Seite (9a) des Blasformrohlings (9) ferner wenigstens ein funktionelles Element (37) in Form eines Temperatursensors, Drucksensors, Heizelements und/oder Kühlelements angebracht und durch Flammspritzen metallisch und/oder keramisch beschichtet wird.

9. Verfahren nach wenigstens einem der vorigen Ansprüche, wobei auf der dem Negativmodell (2) abgewandten Seite (9a) des Blasformrohlings (9) ferner ein elektromagnetisch auslesbarer Datenträger, insbesondere ein RFID-Chip, angebracht wird.

10. Verfahren nach wenigstens einem der vorigen Ansprüche, wobei das Negativmodell (2) zum Ablösen des Blasformrohlings (9) elastisch verformt wird und/oder der Blasformrohling zum Ablösen von dem Negativmodell elastisch verformt wird.

11. Verfahren nach wenigstens einem der vorigen Ansprüche, wobei das Negativmodell (2) auf einem Sockel (6) mit wenigstens einer Negativform (6a) für Befestigungselemente (9b) zum Befestigen des Blasformrohlings (9) in einer äußeren Formschalen (19, 20) montiert ist, und wobei das Negativmodell (2) und die Negativform (6a) beim Herstellen des Blasformrohlings (9) gemeinsam durch Flammspritzen beschichtet werden.

12. Verfahren nach wenigstens einem der vorigen Ansprüche, ferner mit einem Schritt zum Hinterfüllen der Blasformrohlinge (9) auf ihrer dem Negativmodell (2) abgewandten Seite mit einer Hinterfüllung (11) aus einem insbesondere metallhaltigen Gießharz, einer Metalllegierung und/oder einem insbesondere metallhaltigen Schaum.

13. Verfahren nach Anspruch 12, wobei die Blasformrohlinge (9) in äußeren Formschalen (19, 20) platziert und durch das Hinterfüllen mit diesen verbunden werden.

## Claims

1. Method for manufacturing blow molds (1, 31) for plastic containers (32), in particular plastic bottles, comprising a step of manufacturing blow mold preforms (9, 35, 36) by flame-spraying at least one metal-containing and/or ceramic-containing and/or plastic-containing layer (13, 14) on a negative model (2) of at least one segment (3, 4, 35, 36) of said blow mold to be manufactured, and detaching said at least one layer from said negative model.

2. Method according to claim 1, wherein said negative model (2) is coated first with a contact layer (13) of said blow mold preform (9) and subsequently with a carrier layer (14) of said blow mold preform (9, 35, 36) and wherein said contact layer comprises a thermal conductivity specifically adapted to a predetermined blowing process and/or lower electrical conductivity and/or higher mechanical resistance to wear and/or higher toughness and/or tensile strength and/or improved corrosion resistance and/or resistance to microbes than said carrier layer.

3. Method according to claim 1 or 2, wherein said blow mold preforms (9, 35, 36) are manufactured by fully circumferentially coating a container or container model and subsequently segmenting said coated container / container model.

4. Method according to claim 1 or 2, wherein said blow mold preforms (9, 35, 36) are manufactured by partially circumferentially embedding a container or container model, in particular, in a viscoplastic base (6) and by coating said exposed container portion.

5. Method according to at least one of the preceding claims, wherein said negative model (2) comprises a sample container, in particular a plastic bottle which is filled with a cooling medium and/or is under positive pressure.

6. Method according to at least one of the preceding claims, wherein at least a dissolvable negative mold (16) made of a chemically and/or thermally detachable material is temporarily applied to the side (9a) of said blow mold preform (9) facing away from said negative model (2) and is by flame-spraying applied a metallic and/or ceramic coating.

7. Method according to at least one of the preceding claims, wherein also heat conduction tubes are permanently applied to said side (9a) of said blow mold preform (9) facing away from said negative model (2) and are by flame-spraying applied a metallic and/or ceramic coating.

8. Method according to at least one of the preceding claims, wherein at least a functional element (37) in the form of a temperature sensor, a pressure sensor, a heating element, and/or a cooling element are further applied to said side (9a) of said blow mold preform (9) facing away from said negative model (2) and is by flame-spraying applied a metallic and/or ceramic coating.

9. Method according to at least one of the preceding claims, wherein an electromagnetically readable data carrier, in particular an RFID chip, is further applied to said side (9a) of said blow mold preform (9) facing away from said negative model (2).

10. Method according to at least one of the preceding claims, wherein said negative model (2) is elastically deformed for detaching said blow mold preform (9), and/or said blow mold preform is elastically deformed for detaching from said negative model.

11. Method according to at least one of the preceding claims, wherein said negative model (2) is mounted on a base (6) with at least one negative mold (6a) for fasteners (9b) for affixing said blow mold preform (9) in an outer mold shell (19, 20), and wherein said negative model (2) and said negative mold (6a) are jointly coated by flame-spraying when manufacturing said blow mold preform (9).

12. Method according to at least one of the preceding claims, further comprising a step of back-filling said blow mold preforms (9) on their side facing away from said negative model (2) with a back-fill (11) of, in particular, metal-containing resin, a metal alloy and/or, in particular, metal-containing foam.

13. Method according to claim 12, wherein said blow mold preforms (9) are placed in outer mold shells (19, 20) and connected thereto by back-filling.

## Revendications

1. Procédé de fabrication de moules de moulage par soufflage (1, 31) pour des récipients ou contenants (32) en matière plastique, notamment des bouteilles en matière plastique, comprenant une étape pour fabriquer des ébauches de moules de soufflage (9, 35, 36) par pulvérisation à la flamme d'au moins une couche (13, 14) renfermant un métal et ou renfermant une céramique et/ou renfermant une matière plastique, sur un modèle négatif (2) d'au moins un segment (3, 4, 35, 36) du moule de soufflage à fabriquer, et par détachement de ladite au moins une couche, du modèle négatif.

2. Procédé selon la revendication 1, d'après lequel le modèle négatif (2) est revêtu tout d'abord d'une couche de contact (13) de l'ébauche de moule de soufflage (9), et ensuite d'une couche de porteuse (14) de l'ébauche de moule de soufflage (9, 35, 36), et d'après lequel la couche de contact présente une conductibilité thermique adaptée à un processus de soufflage prédéterminé, et/ou une conductivité électrique plus faible et/ou une résistance mécanique à l'usure plus élevée et/ou une ténacité plus élevée et/ou une résistance à la rupture plus élevée et/ou une meilleure tenue à la corrosion et/ou une meilleure inhibition des germes que la couche porteuse.

3. Procédé selon la revendication 1 ou la revendication 2, d'après lequel les ébauches de moule de soufflage (9, 35, 36) sont fabriquées par revêtement d'un contenant ou modèle de contenant, et, ensuite, par segmentation du contenant/modèle de contenant.

4. Procédé selon la revendication 1 ou la revendication 2, d'après lequel les ébauches de moule de soufflage (9, 35, 36) sont fabriquées par encastrement périphérique partiel d'un contenant ou modèle de contenant dans une embase (6) notamment viscoplastique, et par revêtement de la partie de contenant restant dégagée.

5. Procédé selon l'une au moins des revendications précédentes, d'après lequel le modèle négatif (2) comprend un prototype ou échantillon de contenant, notamment une bouteille en matière plastique remplie d'un agent de refroidissement et/ou se trouvant sous pression.

6. Procédé selon l'une au moins des revendications précédentes, d'après lequel sur le côté (9a) de l'ébauche de moule de soufflage (9), qui est opposé à celui où se trouve le modèle négatif (2), on rapporte, par ailleurs, temporairement, au moins un négatif de moule (16) détachable, en un matériau pouvant être détaché par voie thermique et/ou chimique, et on procède à son revêtement métallique et/ou céramique par pulvérisation à la flamme.

7. Procédé selon l'une au moins des revendications précédentes, d'après lequel sur le côté (9a) de l'ébauche de moule de soufflage (9), qui est opposé à celui où se trouve le modèle négatif (2), on rapporte, par ailleurs, de manière permanente, des tubes conducteurs de chaleur, et on procède à leur revêtement métallique et/ou céramique par pulvérisation à la flamme.

8. Procédé selon l'une au moins des revendications précédentes, d'après lequel sur le côté (9a) de l'ébauche de moule de soufflage (9), qui est opposé à celui où se trouve le modèle négatif (2), on rapporte, par ailleurs, au moins un élément fonctionnel (37) sous la forme d'un capteur de température, d'un capteur de pression, d'un élément chauffant et/ou d'un élément de refroidissement, et on procède à son revêtement métallique et/ou céramique par pulvérisation à la flamme.

9. Procédé selon l'une au moins des revendications précédentes, d'après lequel sur le côté (9a) de l'ébauche de moule de soufflage (9), qui est opposé à celui où se trouve le modèle négatif (2), on rapporte, par ailleurs, un support de données pouvant être lu par voie électromagnétique, notamment une puce RFID.

10. Procédé selon l'une au moins des revendications précédentes, d'après lequel le modèle négatif (2) est déformé élastiquement pour détacher l'ébauche de moule de soufflage (9), et/ou l'ébauche de moule de soufflage est déformée élastiquement pour le détacher du modèle négatif.

11. Procédé selon l'une au moins des revendications précédentes, d'après lequel le modèle négatif (2) est monté sur une embase (6) avec au moins une forme négative (6a) pour des éléments de fixation (9b) destinés à fixer l'ébauche de moule de soufflage (9) dans une coque extérieure de moule (19, 20), et d'après lequel le modèle négatif (2) et la forme négative (6a) sont revêtus en commun, par pulvérisation à la flamme, lors de la fabrication de l'ébauche de moule de soufflage (9).

12. Procédé selon l'une au moins des revendications précédentes, comprenant en outre une étape de remplissage de soutien arrière des ébauches de moule de soufflage (9), sur leur côté opposé à celui où se trouve le modèle négatif (2), avec un remplissage (11) constitué d'une résine renfermant notamment du métal, d'un alliage métallique et/ou d'une mousse renfermant notamment du métal.

13. Procédé selon la revendication 12, d'après lequel les ébauches de moule de soufflage (9) sont placées dans des coques extérieures de moule (19, 20), et sont reliées à ces dernières par le remplissage de soutien arrière.
